# EUROPEAN PATENT SPECIFICATION

(11) **EP 4 460 218 B1**
(45) Date of publication and mention of the grant of the patent: **17.06.2026**
(21) Application number: 22850751.3
(22) Date of filing: 28.12.2022
(51) Int. Cl.: A47J 31/42, A47J 42/44, A47J 42/50

(54) **GRINDING APPARATUS AND METHOD, CORRESPONDING MACHINE AND METHOD FOR PREPARING BEVERAGES**
MAHLVORRICHTUNG UND VERFAHREN, ZUGEHÖRIGE MASCHINE UND VERFAHREN ZUR ZUBEREITUNG VON GETRÄNKEN
APPAREIL ET PROCÉDÉ DE BROYAGE, MACHINE CORRESPONDANTE ET PROCÉDÉ DE PRÉPARATION DE BOISSONS

(30) Priority: 07.01.2022 IT 202200000164
(43) Date of publication of application: 13.11.2024
(73) Proprietor: De' Longhi Appliances S.r.l. Con Unico Socio, 31100 Treviso (IT)
(72) Inventor: ZARATIN, Enrico, 31100 Treviso (IT); ROSETTA, Simone, 31100 Treviso (IT); ROSSETTO, Giovanni, 31100 Treviso (IT); SANSON, Roberto, 31100 Treviso (IT); PICCOLI, Igor, 31100 Treviso (IT); FACCO, Marco, 31100 Treviso (IT)
(74) Representative: Petraz, Gilberto Luigi
(86) International application number: PCT/IT2022/050345
(87) International publication number: WO 2023/131984

(56) References cited:
- WO-A1-2019/076868
- IT-A1- 201900 012 699
- RU-C2- 2 656 782
- US-A1- 2012 024 160
- US-A1- 2018 279 830
- US-B2- 10 973 371

## Description

### FIELD OF THE INVENTION

The present invention concerns a grinding apparatus suitable to grind predefined doses of beans, in particular - but not only - coffee beans. The grinding apparatus can be of the autonomous type, or integrated inside a machine for preparing beverages. The present invention also concerns a method for grinding beans, a machine and the corresponding method for preparing a beverage.

### BACKGROUND OF THE INVENTION

In the field of machines for preparing beverages, in particular those for producing coffee-based beverages are known, mainly for domestic use, in which the beverage is obtained by infusing an aromatic mixture of ground coffee.

Machines are known which, in addition to an infusion unit, comprise a grinding apparatus to produce said mixture starting from coffee beans contained in a suitable hopper, which can be fixed on the structure of the machine, or removable.

Removable type hoppers enable consumers to change the type of coffee beans to be used, since they have a container provided with a lower exit aperture which can be closed by means of one or more closing elements, through which the coffee beans can enter the grinding apparatus.

During use, the lower aperture normally remains open, so that the coffee beans fall into the grinding device by gravity, filling the available space. When the hopper is removed, both a certain quantity of coffee powder and also a quantity of coffee beans to be ground remain in the grinding device.

Consequently, when changing the hopper or replacing the type of beans to be used, in order to prevent contamination between different types of beans, or to prevent spillage of the product, it is necessary to empty the grinding device, either manually or by preparing a beverage with the remaining type of beans. Additionally, especially if the apparatus is not used for some time, the beans and the powder remaining in the grinding device can deteriorate and lose their aroma.

To try to overcome these problems, solutions are known in which the quantity of coffee beans entering the grinding apparatus is measured by volumetric dosing devices.

However, these volumetric dosing devices of a known type do not allow an adequate measurement of the quantity of beans, and the doses of beans supplied to the grinding apparatus do not exactly correspond to the quantity of product powder required to deliver the beverage selected by the user. In fact, beans of different origins can have very different shapes and sizes, so that even the quantity by weight in the same volume can vary greatly, depending on the origin.

Solutions are also known which provide dosing devices located between the hopper and the grinding apparatus, the function of which is to selectively transport a predefined dose of beans from the hopper to the grinding device.

Furthermore, these known solutions are able to supply only predefined and constant doses of beans and it is not possible to vary the quantity of beans for a single dose as desired.

Solutions are also known which provide to weigh the coffee powder obtained downstream of the grinding device.

Furthermore, solutions are known which provide an apparatus for grinding beans provided with a fixed hopper inside which there are disposed both means for moving the beans and also actuation means, such as a gearmotor, to move them and cause them to rotate. A solution of this type is described for example in WO-A-2019/076868. However, this solution does not allow the user to replace the hopper and therefore does not allow to easily change the type of beans to be used, consequently it does not avoid the problem cited above relating to contamination between different types of beans.

These solutions do not solve the problem of residual beans in the dosing device and the consequences indicated above.

Document US-A-2012/0024160 describes a package for coffee beans and a system for preparing beverages comprising said package, a grinding device and a device for dosing the beans comprising a measuring chamber and means for emptying the measuring chamber and for feeding the beans to a grinding device. This solution therefore requires additional components to weigh a dose of beans downstream of the cartridge and upstream of the grinding device, with a consequent increase in overall sizes and costs due to the additional components.

Document US-B-10,973,371 describes an apparatus for the dosed feeding of coffee beans comprising a dosing unit that separates the beans, configured to dose the coffee beans in individual measurement, that is, to weigh on each occasion each single bean supplied by one or more hoppers into a container in order to obtain the desired mixture of coffee beans before supplying them to a grinding device.

There is therefore a need to perfect a grinding apparatus and method, and a machine and method for preparing a beverage, which can overcome at least one of the disadvantages of the state of the art.

To do this it is necessary to solve the technical problem of providing a dosing device suitable to supply predefined and precise quantities to said grinding device, so that the correct quantity of beans required can be fed.

One purpose of the present invention is to provide a grinding apparatus and method which allow to measure the exact quantity of beans which is fed to the grinding device so as to supply the required quantity of powder on each occasion without leaving residual beans in the grinding device.

Another purpose of the present invention is to provide a grinding apparatus and method, and a machine and a method for preparing a beverage which allow to change the variety of beans, or in general of the dry food substance to be used, preventing contamination with the previous one.

Another purpose of the present invention is to provide a grinding apparatus and method which allow to vary the quantity of beans for a single dose according to requirements.

Another purpose of the present invention is to perfect a machine and a method for preparing a beverage which allow to keep the grinding device substantially empty between two successive beverage preparations.

Another purpose of the present invention is to provide a grinding apparatus and a machine for preparing a beverage which are versatile and simple to use for the user.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, and to resolve the technical problem disclosed above in a new and original way, also achieving considerable advantages compared to the state of the prior art, a grinding apparatus according to the present invention comprises:
- at least one hopper suitable to contain and feed beans, which is removably connected to a support structure;
- a grinding device and
- a dosing device configured to feed predefined doses of beans to the grinding device.

In accordance with the present invention, the dosing device comprises means for feeding the beans, disposed inside the at least one hopper and selectively drivable by means of drive means disposed outside the at least one hopper in order to feed the beans toward an exit aperture, and weighing means associated with the hopper and configured to weigh the hopper and its contents in order to measure a quantity of beans present in, or released by, the at least one hopper.

In accordance with another aspect of the present invention, the grinding apparatus comprises a control unit connected to the weighing means and configured to command the drive at least of the feed means and of the grinding device as a function of the data detected by the weighing means.

Doing so achieves at least the advantage of realizing a grinding apparatus that allows to measure the exact quantity of beans that is released by the hopper and fed to the grinding device.

Furthermore, by weighing the hopper and the quantity of beans in it directly, it is possible to feed to the grinding device, on each occasion, only the quantity of beans required, thus allowing to remove the hopper whenever required, even to change the type of beans to use, without leaving residual beans inside the grinding device which could deteriorate or lose their aroma.

In fact, thanks to the weighing means and the feed means it is possible to measure and adjust the exact quantity of beans that is fed to the grinding device.

In accordance with another aspect of the present invention, the weighing means comprise, or consist of, load cells and/or dynamometers which at least partly support the hopper when it is connected to the support structure.

According to preferred embodiments, the weighing means comprise, or consist of, load cells that support a housing compartment for the hopper.

According to some embodiments, the housing compartment is supported exclusively by the load cells, so that these can reliably measure the weight of the housing compartment and, if present, of the hopper disposed therein and its contents.

In accordance with the present invention, the weighing means are connected to a mobile plate of the support structure and are associated with a fixed portion of the support structure by means of mechanical support means which are configured in such a way as to keep the hopper, that is the housing compartment of the hopper, floating with respect to the support structure and allow it to be weighed.

The mechanical support means can comprise at least one elastic element configured to dampen any vibrations, or other disturbances, such as for example the stresses created during the insertion of the hopper on the support structure.

According to the invention, there are provided end-of-travel members between the mobile plate, which during use is connected to the hopper, or a component integral therewith, and the fixed portion, or a component integral therewith, configured to limit the travel of the hopper during the insertion and/or removal, in order to prevent excessive stresses on the load cells.

In accordance with another aspect of the present invention, the feed means comprise a feed member disposed in a container of the hopper and able to be associated with the drive means which are outside the hopper, and configured to convey the beans toward the exit aperture.

The feed member comprises a rotatable oblong body that extends along an axis of rotation and at least one blade that extends in a radial direction to the axis of rotation, the blade being configured to selectively feed the beans toward the exit aperture and the grinding device.

According to a preferred embodiment, the axis of rotation is substantially inclined with respect to a vertical axis toward the lower aperture and the feed member comprises a single blade.

According to one aspect of the invention, the at least one hopper comprises a lower plate having a bottom wall in which an aperture is provided defining the exit aperture, preferably disposed misaligned with respect to the axis of rotation, and a substantially cylindrical lateral wall, distanced from the perimeter edge of the bottom wall, which defines a chamber inside which the feed member is disposed, during use.

In the lateral wall in correspondence with the exit aperture, there is preferably provided a portion protruding toward the outside of the lateral wall, which extends above the exit aperture, to facilitate the passage of the beans.

In accordance with another aspect of the present invention, the feed means comprise a feed channel disposed in the at least one hopper, having a main development along a longitudinal axis, inside which there is disposed an auger which is able to be associated with drive means, the auger being disposed rotatable with respect to the longitudinal axis and configured to receive the beans coming from an entry aperture and to feed them toward the exit aperture.

According to another aspect of the invention, the apparatus comprises two or more hoppers, each one suitable to contain beans, which are both supported by the weighing means and connected to a single grinding device by means of a conveyor. A user can, on each occasion, select the hoppers in order to command, on each occasion, the feed means of the selected hopper in order to feed the beans present therein to the grinding device.

In accordance with another aspect of the present invention, a grinding method for preparing a desired dose of powder starting from a substance in the form of beans comprises:
- removably connecting at least one hopper to a support structure and opening an exit aperture for the beans;
- receiving an indication concerning a desired value of a quantity of the beans to grind;
- weighing the at least one hopper and the beans present therein;
- driving feed means of a dosing device, which are disposed inside the at least one hopper, to selectively feed the quantity of beans to grind toward a grinding device;
- weighing, substantially continuously, an instantaneous value of the at least one hopper while the beans are fed into the grinding device and sending a signal relating to the instantaneous value to a control unit in order to compare the instantaneous value with the desired value;
- when the instantaneous value corresponds to the desired value, stopping the feed means;
- completely grinding the quantity of beans fed into the grinding device and obtaining the desired dose of powder.

By "instantaneous value" here and hereafter in the description we mean the value measured in the instant in which the weighing occurs. The weighing action is carried out in a substantially continuous manner by detecting, in succession, a plurality of samples of instantaneous values with a very high sampling frequency, for example 20-100 samples/second so as to know the weight of the hopper in real time.

In accordance with some embodiments, the weighing of the quantity of beans fed to the grinding device occurs by detecting the difference between the weight measured during the feeding and the weight measured before the feeding.

According to some embodiments, the weight measured before the feeding can be considered as an absolute value, or be considered as a tare and set to zero.

In accordance with another aspect of the present invention, the method comprises a control step to verify whether the entire quantity of beans fed to the grinding device has been completely ground before turning off the grinding device.

In accordance with another aspect of the present invention, the control step is carried out by detecting the current intensity absorbed by the grinding device and/or detecting the rotation speed of the grinding device during the grinding step as above, determined for example on the basis of the number of revolutions completed by the grinding device in a unit of time.

In accordance with another aspect of the present invention, the method provides to start the feed means and the grinding device substantially at the same time. In fact, by weighing the hopper and the beans present therein directly, it is not necessary to wait for the entire quantity of beans required to have accumulated in the grinding device before proceeding with the grinding, thus reducing the preparation time for the desired dose of powder.

In accordance with another aspect of the invention, the grinding method provides to send a signal to a user, by means of a user interface for example, to signal when the quantity of the beans in the hopper or in each hopper is below a predefined threshold value, so as to facilitate the user in restoring the reserve of the beans.

In accordance with another aspect of the present invention, a machine for preparing coffee beverages comprises a grinding apparatus as disclosed above, a support structure, shaped in such a way as to internally have a compartment, the support structure being configured to cooperate with the grinding apparatus, an infusion unit and at least one user interface provided with at least one display device by means of which a user can select a certain beverage, set one or several characteristics thereof, or select other options or operating modes.

In accordance with another aspect of the present invention, a method for preparing a beverage according to the present invention comprises at least: removably connecting at least one hopper to a support structure and opening an exit aperture for the beans;
receiving a command for the preparation of a beverage in a machine for preparing coffee beverages, determining a desired value of a quantity of beans necessary and sufficient to prepare the selected beverage;
weighing the quantity of beans contained in the at least one hopper connected to the machine,
preparing a desired dose of powder having a quantity corresponding to the desired value, wherein feed means of a dosing device, which are disposed inside the at least one hopper, are driven by means of drive means disposed outside the hopper to selectively feed the quantity of beans toward a grinding device that grinds them to obtain a powder; the weighing means weigh, substantially continuously, an instantaneous value of the at least one hopper in order to measure the quantity of beans released by the latter and fed into the grinding device, and they send a signal relating to the instantaneous value to a control unit which compares it with preset values relating to the selected beverage, which are stored in a storage device; when the instantaneous value measured corresponds to the desired value relating to the beverage selected, the control unit stops the feed means and commands the grinding device to completely grind the quantity of beans and obtain a powder to be fed to an infusion unit; a step in which the powder is subjected to infusion and the beverage is delivered.

According to one aspect of the present invention, the method for preparing a beverage comprises a control step in which the control unit verifies that the quantity of powder fed to the infusion unit corresponds to the preset value relating to the selected beverage, before the powder is subjected to infusion and the beverage is delivered.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic and simplified representation of a grinding apparatus according to the present invention integrated in a machine for preparing a beverage;
- fig. 1a is a schematic and simplified representation of the grinding apparatus and of the machine of fig. 1 in a condition in which the hopper is extracted;
- fig. 2 is a schematic exploded view of a hopper of the grinding apparatus in accordance with a first embodiment of the present invention;
- fig. 3 is a schematic section detail of a grinding apparatus, in accordance with the first embodiment, in a first operating condition;
- fig. 4 is a schematic section detail of a variant of the grinding apparatus of fig. 3 in a second operating condition;
- fig. 5 is a schematic perspective view of the grinding apparatus in accordance with the first embodiment of figs. 2-4 integrated in the machine of fig. 1;
- fig. 6 is a top view of fig. 5;
- fig. 7 is a schematic perspective view of a grinding apparatus in accordance with a second embodiment;
- fig. 8 is a partial section view of the grinding apparatus of fig. 7;
- fig. 9 is a schematic view of a variant of a grinding apparatus in accordance with a third embodiment of the invention;
- fig. 10 is a block diagram relating to a control circuit of the grinding apparatus according to the present invention.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

With reference to the attached drawings, a grinding apparatus 10, 110, 210 according to the invention is described, configured to receive at entry a food substance in the form of beans or grains and grind it so as to obtain a dose of mixture in powder form.

The grinding apparatus 10, 110, 210 can be an autonomous apparatus of the "stand alone" type, or it can also be integrated in a machine 200.

The present invention also concerns a machine 200, provided with the apparatus 10, 110, 210 and usable to prepare a beverage through the infusion of the powdered mixture.

Please note that by the terms "beans" and/or "grains", here and hereafter in the description we mean in particular coffee beans or parts thereof. However, other types of food substances, such as for example seeds, cereals, barley, salt or peppercorns, or suchlike, are not excluded.

The apparatus 10 is equipped with a fixed support structure 18 configured to support its various components. In the case of an apparatus 10 of the autonomous type, the support structure 18 can be a portion of a bearing structure, of a lateral wall or of a cover of the apparatus 10.

According to possible variants, in the case of an apparatus 10 integrated in a machine 200, the support structure 18 could be connected to, or defined by, a support structure 201 of the machine 200, shaped in such a way as to have, internally, a compartment 202 in which the different components of the machine 200 are housed.

The apparatus 10 comprises at least one hopper 11, configured to contain and feed the beans, and a grinding device 12.

The apparatus 10 also comprises a dosing device 13, located at least partly inside the hopper 11 and configured to selectively feed the beans to the grinding device 12.

The hopper 11 comprises a container 14 for containing the beans and is provided with an exit aperture 17 through which the beans can exit.

According to some embodiments, the dosing device 13 comprises feed means 29 disposed inside the container 14, which are able to be selectively driven to feed the beans toward the exit aperture 17, and weighing means 70 associated with the hopper 11.

The feed means 29 therefore form part of the hopper 11 itself, while the weighing means 70 are separate and independent therefrom, although they are disposed in such a position as to weigh, during use, the hopper 11 and its contents.

However, the hopper 11 according to the invention could also be used in apparatuses 10 provided with weighing means 70 associated with different components, for example associated with the grinding device 12, or with positions disposed upstream of the grinding device 12, or even weighing means suitable to weigh the ground coffee powder downstream of the grinding device 12.

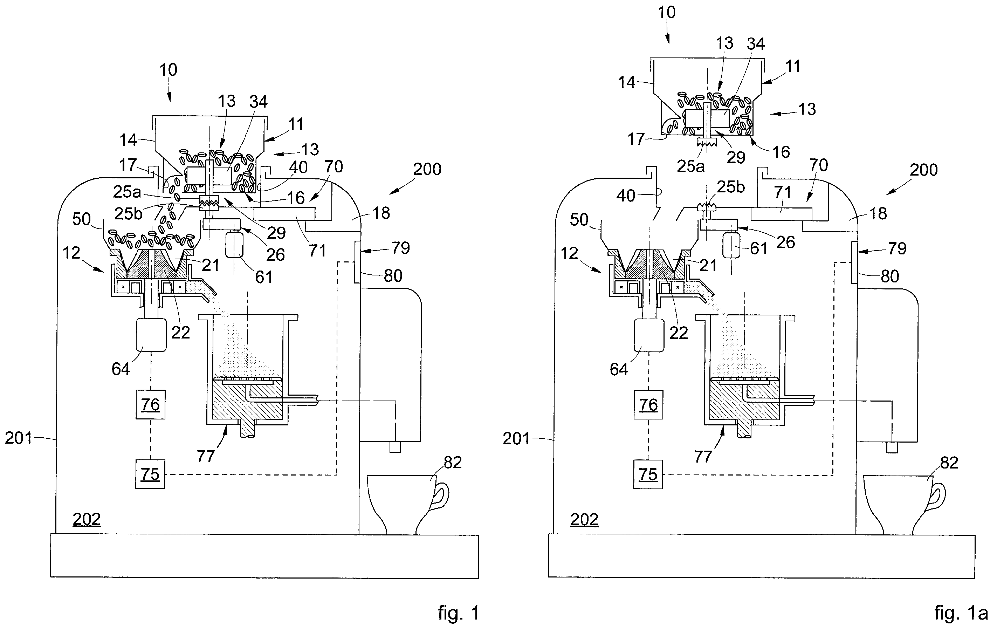

Some embodiments described here also concern a hopper 11 comprising a container 14 for the beans, a closing bottom 16 disposed rotatable with respect to the container 14 in order to selectively open and close the exit aperture 17 for the beans, and feed means 29 able to be selectively driven to feed the beans toward the exit aperture 17. The hopper 11 can be selectively inserted (fig. 1) into, and extracted from, a housing compartment 40 (fig. 1a).

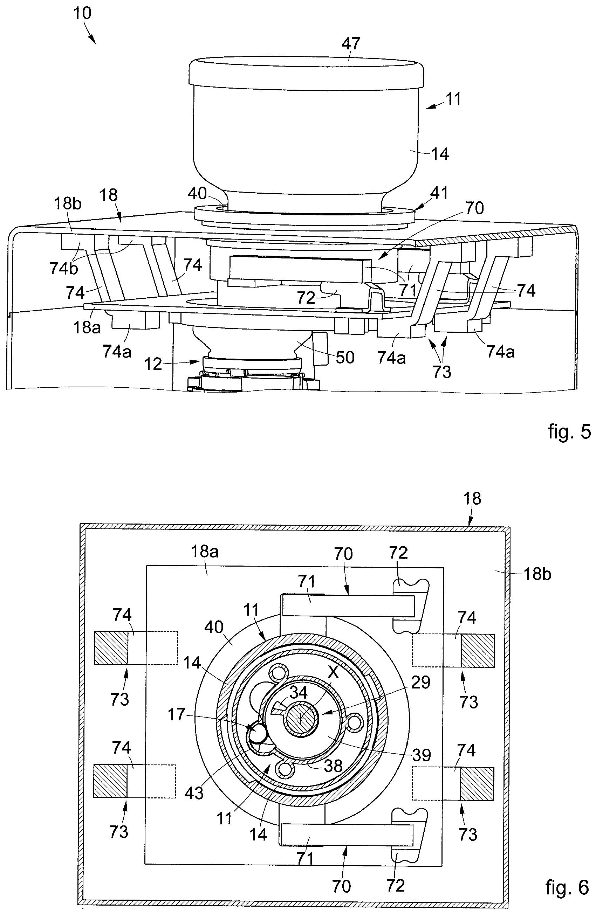

According to a first embodiment described with reference to figs. 1-6, the container 14 is provided with a lower aperture 15 and the hopper 11 comprises a closing bottom 16 which is disposed rotatable with respect to the container 14 in order to selectively open and close the exit aperture 17 of the beans.

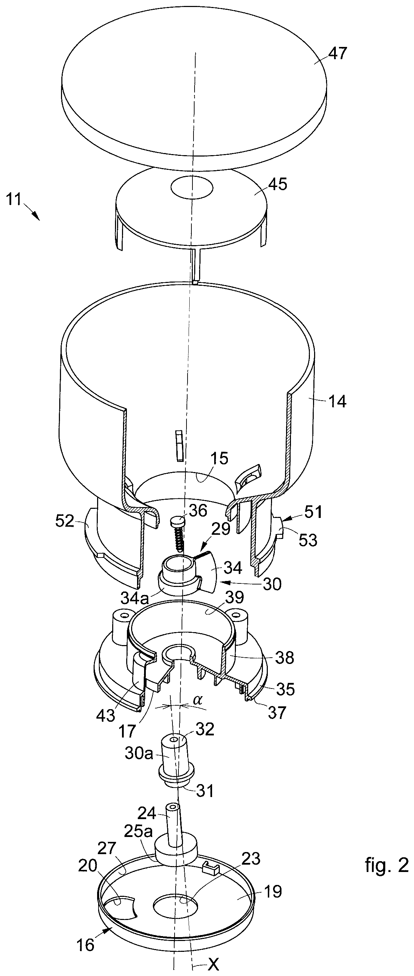

The bottom 16 comprises a bottom wall 19 (fig. 2) in which a passage aperture 20 for the beans is made, which in an open condition is aligned with the exit aperture 17 of the beans, while in a closed condition is disposed offset with respect to the exit aperture 17, and the latter is closed by the bottom wall 19.

The bottom wall 19 can also be provided with a central hole 23 through which there is disposed a drive pin 24 to drive at least the feed means 29 of the dosing device 13, from the outside of the hopper 11, that is, of the container 14, as will be described below.

The pin 24 is disposed inside the hopper 11, rotatable along a first axis of rotation X, inclined with respect to a vertical axis by an angle of inclination α, optimized for the purposes of the functionality of the feed means 29, for example comprised between 5° and 20°, and it is provided at the lower part with connection members 25a suitable to be connected, during use, to mating connection members 25b of drive means 26 disposed outside the hopper 11.

The drive means 26 can be associated with the support structure 18. The drive means 26 connect to the feed means 29 when the hopper 11 is inserted in, and coupled to, a housing compartment 40 of the apparatus 10 which is associated with, or defined by, the support structure 18.

The drive means 26 can comprise a drive shaft 60 connected to a drive member 61 and suitable to engage, with its own connection members 25b, with the connection members 25a of the drive pin 24, in order to make it rotate. The drive shaft 60 and the drive member 61 can be connected to each other, for example, directly or by means of one or more intermediate idle gears and members.

The bottom 16 can also comprise a lateral wall 27 and the passage aperture 20 can be delimited by the lateral wall 27 or it can also be made through it.

The bottom 16 can be provided with clamping members, not shown in the drawings, suitable to engage with respective second clamping members, for example present in the compartment 40 of the apparatus 10, in order to clamp the bottom 16 and allow a rotation of the container 14 with respect thereto in order to open the passage aperture 20, as will be better described below.

The bottom wall 19 can be made, or comprise at least one portion, of rubber or other deformable material suitable to guarantee a sealed closure of the hopper 11 when the bottom 16 is in the closed condition.

With reference to figs. from 2 to 6, the feed means 29 comprise, or consist of, a feed member 30 disposed rotatable around an axis of rotation X inclined, with respect to the vertical axis, by an angle of inclination α comprised between 3° and 20°.

In particular, the feed member 30 is disposed rotatable with respect to the axis of rotation X of the pin 24 and it can be connected thereto.

According to some embodiments, the feed member 30 has an oblong body 30a, which comprises a first end 31, lower during use, and a second end 32, upper during use.

The first end 31 comprises a cavity 33 configured to allow an association of the feed member 30 with the pin 24. For example, the shape and sizes of the pin 24 can be such as to allow an insertion of the oblong body 30a inside the cavity 33, in such a way as to define a reciprocal coupling and drag it in rotation. The two elements, that is, the pin 24 and the oblong body 30a, can be connected to each other by means of a screw 36.

According to other embodiments, the pin 24 and the feed member 30, or the oblong body 30a, are made in a single piece.

According to possible variants, they can be made in two pieces provided with respective reciprocal engagement members.

The feed member 30 also comprises a blade 34, or propeller, made of rigid plastic material for example, which extends in a radial direction with respect to a longitudinal axis of the oblong body 30a, configured to selectively move the beans toward the exit aperture 17, as will be described in detail below.

The blade 34 can extend directly from the oblong body 30a or be associated with it by means of its own central hub 34a.

According to some embodiments, there is a single blade 34, although it is not excluded that in possible variants there are two or more blades 34.

The hopper 11 also comprises a plate 35, able to be associated with the lower aperture 15 and with the bottom 16, which comprises a bottom wall 37, provided with the exit aperture 17, and a substantially cylindrical lateral wall 38 which extends from one side of the bottom wall 37, distanced from the perimeter edge, which defines a chamber 39 inside which the feed member 30 is disposed, during use. The plate 35 can also define part of the dosing device 13.

According to possible variants, the blade 34 can comprise at least one flexible portion made of rubber, silicone, or other elastic or flexible material. Preferably, the flexible portion is provided on the end portion that, during use, faces the internal surfaces of the chamber 39.

The exit aperture 17 of the plate 35 is preferably disposed misaligned with respect to the axis of rotation X and to a central hole 42, and it extends at least partly outside the lateral wall 38, on which there can be provided a protruding portion 43 in correspondence with the exit aperture 17 to facilitate the passage of the beans. The beans are therefore actively thrust by the blade 34 by centrifugal acceleration toward the exit aperture 17, from which they then fall by gravity.

According to some embodiments, the grinding device 12 comprises a grinding chamber 21, into which the beans are conveyed, and a pair of grinders 22 for grinding the beans, which can be selectively distanced in order to vary the granulometry of the powder substance.

According to some embodiments, the weighing means 70 comprise one or more load cells 71 associated, for example attached, with the support structure 18, which preferably support the housing compartment 40. According to possible embodiments, the weighing means 70 could comprise, or consist of, one or more dynamometers.

According to some embodiments, the housing compartment is supported exclusively by the load cells 71, which in turn are connected to the support structure 18.

The apparatus 10 can comprise one or more mechanical support means 73 configured to connect the weighing means 70 to the support structure 18.

Preferably, during use the hopper 11 is housed in the housing compartment 40, which is separate and located floating with respect to the support structure 18 and rests on the mechanical support means 73, which absorb and compensate for any movements of the hopper 11 and of the housing compartment 40 with respect to the support structure 18.

For example, the mechanical support means 73 can comprise a mobile plate 18a to which, by means of brackets or semi-rigid support elements 72, the weighing means 70 associated with the housing compartment 40 are attached.

According to some embodiments, the mechanical support means 73 can consist of one or more semi-rigid support elements 72, which allow to separate the load cells 71 with respect to a fixed portion 18b of the support structure 18.

By "semi-rigid support elements" we mean elements which, due to their conformation or material, are able to provide resistance and robustness to the external forces acting on it, at least in the normal operating conditions of the apparatus 10, but are at the same time able to flex or deform when subjected to forces and stresses that exceed a predefined threshold level, and therefore to absorb and compensate for the latter.

According to possible variants, the mechanical support means 73 can comprise, or consist of, one or more elastic elements 74, having a first end 74a associated with a fixed portion 18b of the support structure 18 and a second end 74b associated with the mobile plate 18a, which is in turn connected to the weighing means 70 by means of semi-rigid support elements 72.

By "elastic elements" we mean elements which, due to their conformation or material, have elastic properties, that is, they are able to deform, to different extents, under the action of external forces and to recover, in whole or in part, their shape when such forces cease to act.

Thanks to the presence of the elastic elements 74, if an excessive force is exerted on the hopper 11, 111 or in the housing compartment 40, 140, the mechanical support means 73 flex and the housing compartment 40 moves to an end-of-travel position without excessively stressing the load cells 71. This will be described in greater detail below.

The elastic elements 74 could comprise, for example, one or more springs, and be configured to dampen vibrations, or any other disturbances, during the weighing of the beans present inside the grinding device 12, so that the weighing is more accurate, as will be explained in detail in the following description.

The apparatus 10 could comprise 3 or more elastic elements 74, disposed around the housing compartment 40, that is the hopper 11, in order to equally distribute any loads and possible stresses.

The mechanical support means 73 have the function of making the housing compartment 40 "floating" with respect to the support structure 18, that is, with respect to the fixed portion 18b. This advantageously allows to greatly reduce the vibrations and noise produced by the apparatus 10 during its use.

According to other simplified embodiments, the semi-rigid support elements 72 can be connected directly to the fixed portion 18b and, if suitably sized, can themselves act as an elastic element.

Between the housing compartment 40, or elements integral therewith, and the fixed portion 18b, or elements integral therewith, there are provided end-of-travel members 41, 44 which are configured to cooperate reciprocally and limit the displacement of the housing compartment 40, and therefore of the hopper 11, 111, with respect to the fixed portion 18b.

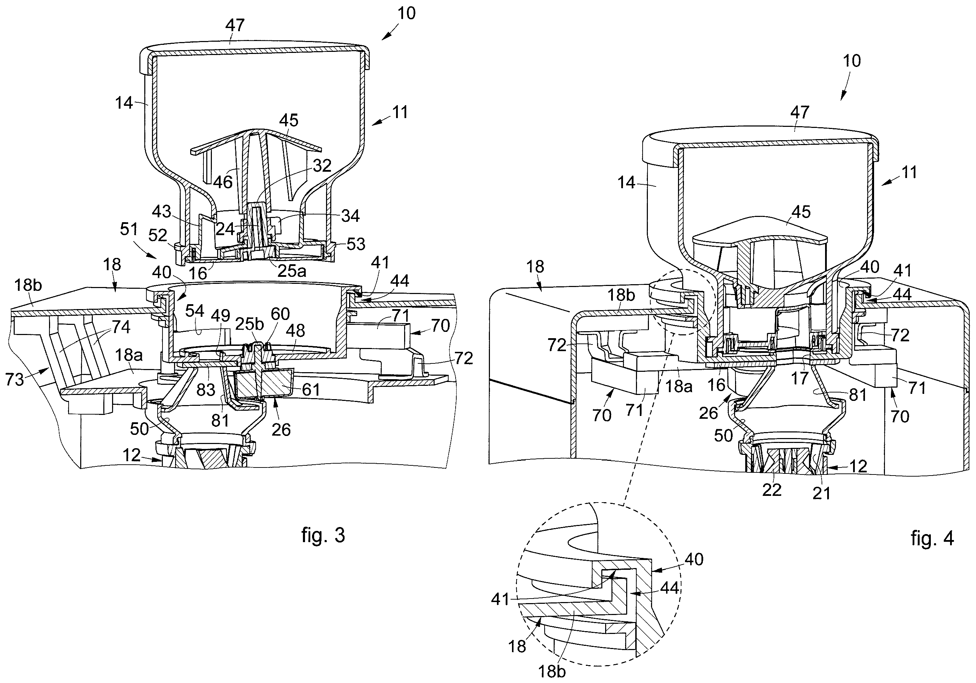

For example, fig. 4 shows that the housing compartment 40 is connected with clearance to a fixed portion 18b of the support structure 18.

According to some embodiments, the compartment 40 comprises a seating 41 and the fixed portion 18b comprises an end portion 44, for example a shaped edge, which is mobile with a certain clearance in several directions inside the seating 41.

In this case, the seating 41 and the end portion 44 act as end-of-travel members.

When forces greater than the contrast forces provided by the mechanical support means 73 are exerted on the hopper 11 or on the housing compartment 40, the compartment 40 moves with respect to the fixed portion 18b until the end portion 44 comes into contact with a wall of the seating 41, thus limiting the travel of the compartment 40, with the aim of preventing accidental overloads acting on the weighing devices 70.

The apparatus 10 also comprises a control unit 75 configured to regulate its operation.

The control unit 75 is, in particular, connected to the weighing means 70 and is configured to receive at entry the measurement detected by them, and command the selective and coordinated operation of the various components, for example, of the dosing device 13 and of the grinding device 12.

In particular, the control unit 75 is configured to command the feed means 29 as a function of the data received from the weighing means 70, in order to feed into the grinding chamber 21, on each occasion, only the quantity of beans required to obtain a predefined dose of powder substance.

For example, a set of values relating to the quantity of powder substance required to prepare one or more beverages could be stored in a storage unit 76 associated with the control unit 75, and the latter could command the selective operation of the dosing device 13 until the quantity of beans that is fed into the grinding device 12 corresponds to one of such values, for example:

| Type of beverage | Grams required |
|---|---|
| Extra light coffee | 4g |
| Light coffee | 6g |
| Normal coffee | 8g |
| Strong coffee | 10g |
| Extra strong coffee | 12g |

In particular, the control unit 75 can be configured to command the feed means 29 in real time, based on the data received from the weighing means 70.

The control unit 75 can be configured to command the activation of the grinding device 12 together with the activation of the feed means 29, without waiting for them to have supplied the entire quantity of beans required.

According to possible variants, the control unit 75 can be configured to command the activation of the grinding device 12 after a certain time interval from the activation of the feed means 29, so as to guarantee the presence of beans inside it, or even when the entire quantity of beans has been fed.

According to other variants, the apparatus 10 comprises a user interface 79 by means of which to directly enter a command relating to a quantity by weight, or a dose of powder substance required.

According to the embodiment of figs. 1-6, the container 14 comprises an upper aperture 44 configured to allow the insertion of the beans, which can be closed substantially hermetically by means of a lid 47.

With the container 14 of the hopper 11 there can be associated a protective element 45, or protective wall, also called "finger guard", which comprises, in correspondence with one of its surfaces, lower during use, a hollow seating 46, or support, with a shape and sizes suitable to house the second end 32 of the feed member 30, so as to support the latter. The seating 46 can comprise, for example, rolling elements, such as one or more bearings, to facilitate the rotation of the feed member 30 inside it.

According to some embodiments, shown in figs. 2-5, the hopper 11 and the compartment 40 connected to the support structure 201 are provided with respective coupling and clamping members 51 configured to cooperate with each other in such a way as to allow a reciprocal coupling in the vertical direction, while preventing a reciprocal rotation.

The clamping members 51 can comprise at least one tab 52 protruding radially from the lateral wall of the container 11 and at least one mating cavity or groove 54 suitable to create a bayonet-type coupling.

Preferably, two tabs 52, 53 are provided, each suitable to be inserted into a cavity or groove 54, 55 thereof, disposed angularly offset from each other, the sizes of which advantageously differ from each other in order to allow a univocal positioning of the hopper 11.

A microswitch or other device suitable to detect the presence of the tabs 52, 53 can be disposed inside at least one cavity 54, 55. Once the tabs 52, 53 have been inserted in the respective cavities 54, 55, the container 14 can be rotated so as to clamp it with respect to the support structure 18, for example by an angle of approximately 40°-50°.

The rotation of the container 14 involves the alignment between the exit aperture 17 and the passage aperture 20 on the bottom 16, allowing the beans to transit through them.

According to some embodiments, the compartment 40 can comprise a bottom wall 48 in which there is provided an inlet 49 for the beans which faces the grinding device 12.

Below the inlet 49 there can be disposed a chamber 50 for collecting the beans, which is connected to the grinding chamber 21 and has the function both of conveying the beans toward the grinding device 12 and also of allowing an accumulation of the beans in the grinding chamber 21. The volume of the collection chamber 50 is designed, in particular, in such a way as to contain a quantity of beans by volume corresponding to the maximum quantity of beans by weight that can be selected, possibly taking into account a certain margin of error, for example 10%, for safety reasons.

The support structure 18 can comprise a cover door 83 suitable to selectively close the inlet 49 when no hopper 11 is inserted.

The door 83 can comprise engagement members, not shown in the drawings, suitable to engage with corresponding second engagement members present on the container 14 in such a way that a rotation of the latter with respect to the support structure 18 entails a simultaneous movement of the door 51 in order to open or close the inlet 49 to the collection chamber 50.

The selective opening and closing of the collection chamber 50 can therefore occur through the manual rotation of the container 11 in one or the other direction.

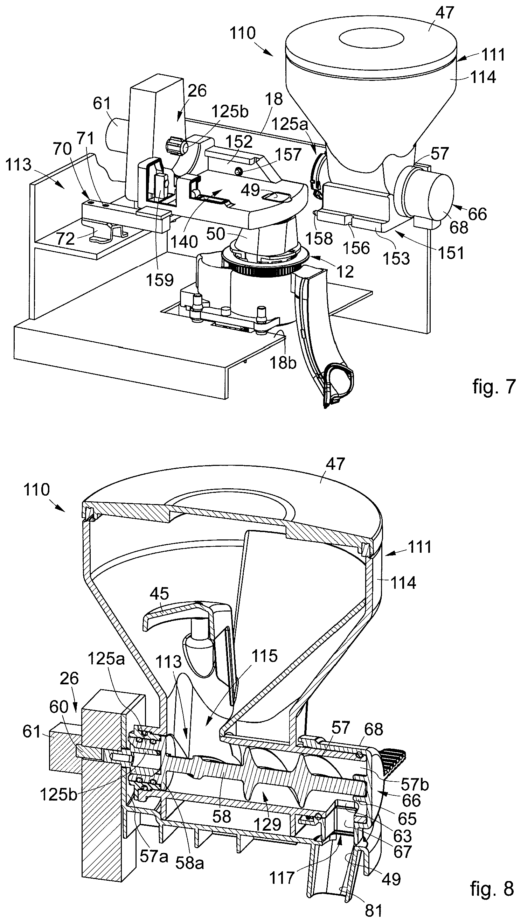

According to some embodiments, with the door 83 there can be associated elastic interference means configured to keep the door 83 in the closed or open position, preventing an accidental movement thereof. The interference means can comprise, for example, elastic elements, for example a spring, associated with a pin which interacts with respective recesses present in the door and causes an interference to the sliding in correspondence with the open and closed positions. Figs. 7 and 8 show a second embodiment of an apparatus 110, in which the elements substantially the same as those of the first embodiment of figs. 2-6 are indicated with the same reference numbers, while elements that have similar functions, but different conformations, are indicated with the same reference number increased by 100.

The grinding device 12 and the weighing means 70 associated with the hopper 111 are substantially the same as those of the embodiment shown in figs. 2-6 and will not be described further.

In particular, also in this embodiment, the weighing means 70 can comprise, or consist of, load cells 71 and/or dynamometers which support the hopper 111, or a housing compartment 140.

According to the embodiments of figs. 7 and 8, the feed means 129 comprise a feed channel 57 having a main development along a horizontal longitudinal axis Y, which is inside the container 114 of the hopper 111.

The hopper 111 shown in figs. 7 and 8 could also be used with apparatuses 110 of different types, provided with weighing means 70 associated with other components, such as the grinding device 12 for example, or with positions disposed upstream of the grinding device 12, or even with weighing means suitable to weigh the ground coffee powder downstream of the grinding device 12.

The feed means 129 also comprise an auger 58, disposed inside the feed channel 57, rotatable with respect to the horizontal longitudinal axis Y, configured to selectively feed the beans coming from the hopper 111 toward an exit aperture 117 and then toward the grinding device 12.

The drive means 26 can be disposed in correspondence with a first longitudinal end 57a of the feed channel 57 and they can comprise a drive member 61 and a drive shaft 60, which comprises connection members 125b configured to engage with mating connection members 125a disposed in a first longitudinal end 58a of the auger 58.

The drive member 61 is advantageously disposed outside the hopper 111, so as to allow an easy removal thereof.

According to possible embodiments, the auger 58 and the drive shaft 60 can be connected to each other directly or by means of one or more idle gears, not shown in the drawings.

The feed channel 57 comprises an aperture, or a hole 63 defining the exit aperture 117, facing the inlet section 49 of the conveyor 81, if present, or of the collection chamber 50, at the opposite end of which the grinding device 12 is installed.

In correspondence with a second longitudinal end 57b, opposite the first end 57a of the feed channel 57, there is disposed an adjustment member 66.

The feed channel 57 comprises a mobile closing wall 67 in correspondence with the hole 63, configured to be moved selectively by using the adjustment member 66 and prevent the beans from escaping through the closing wall 67 through an overlap with the hole 63.

The possibility of selectively closing the exit aperture 63 advantageously allows to easily replace the hopper 111 without causing unwanted falls of the beans.

The adjustment member 66 comprises a knob 68 installed in correspondence with the second longitudinal end 57b of the feed channel 57, rotatable with respect to the longitudinal axis Y, configured to command the selective overlap of the closing wall 67 and of the hole 63, and therefore the closure of the exit aperture 117.

As can also be seen in fig. 7, the hopper 111 is removably associated with the compartment 140 which is connected to the support structure 18 in such a way that the compartment 140 is supported by the load cells 71 and/or dynamometers and is at least partly floating with respect to a fixed portion 18b of the support structure 18.

In this solution, the hopper 111 and the compartment 140 can be provided with respective coupling members 151 configured to cooperate with each other in such a way as to allow a reciprocal coupling in a vertical or horizontal direction.

The coupling members 151 can comprise, for example, one or more grooves, or other guide elements 152, created on opposite lateral walls of the compartment 140, and one or smore elements 153 protruding from a lateral wall of the hopper 111 which are suitable to cooperate with the guide elements 152, or vice versa.

According to other embodiments, not shown, the coupling members 151 can be oriented in a different direction, for example vertically, or even be of another type.

The coupling members 151 can also comprise or cooperate with clamping members 155 configured to guarantee a reciprocal clamping between the hopper 111 and the compartment 140. In the example case, there can be provided a recess 156 created on the hopper 111 and one or more elastic stop pegs 157 disposed in the compartment 140, or vice versa.

The hopper 111 can also comprise an actuator 158 configured to activate a position sensor 159 provided in the compartment 140 when the hopper 111 is clamped therein.

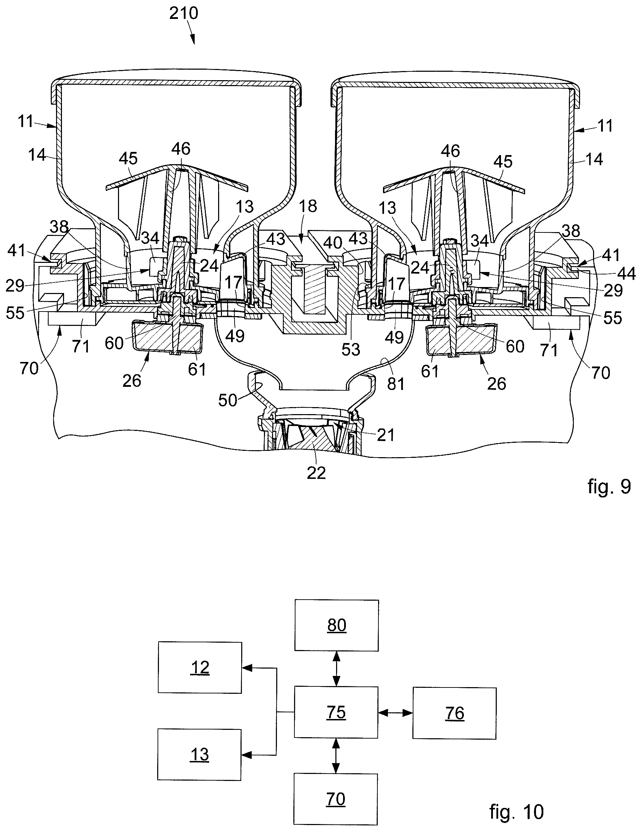

Fig. 9 shows another embodiment of an apparatus 210 comprising two hoppers 11, also indicated with the letters "A" and "B", which can be removably connected in respective housing compartments 40 of the support structure 18, and weighing means 70 are provided associated with each of them. However, the number of hoppers 11 could also be higher, for example between three and five.

The weighing means 70 can comprise a plurality of load cells 71 dedicated to each hopper 11A, 11B, or even load cells 71 partly or totally shared by two or more of them.

The connections of the hoppers 11A, 11B to the respective compartments 40, and of the latter to the load cells 71 and to the support structure 18 by means of the support means 73, are substantially the same as those described for the other embodiments.

In the example case, both hoppers 11A, 11B supply the beans to a same grinding device 12 and are connected to the same collection chamber 50 by means of a conveyor 81.

The feed means 29 can be connected to respective drive means 26 which can be selected independently of each other.

In the case of two or more hoppers 11, selection means can be provided, for example integrated in a user interface 79 or made as mechanical type members, by means of which a user can select one or the other hopper 11, and the control unit 75, on the basis of the selection made, can command the respective feed means 29.

According to other embodiments, if the hoppers 11 contain different beans, it can also be provided that a user can select a certain percentage of beans for each of the hoppers 11, for example 50-50%, 20-80%, 30-70% or other, and the control unit 75 can command the respective feed means 29 of one and the other hopper 11 simultaneously, or in sequence, to obtain a dose of both types of beans with the required percentages.

With reference to fig. 1, a machine 200 according to the present invention can comprise, in addition to the components described above, an infusion unit 77 configured to prepare a certain beverage, a hydraulic circuit, not shown in the drawings, for feeding water to the infusion unit 77, and a delivery apparatus hydraulically connected to the infusion unit 77, which allows to deliver the certain beverage into a container 82, for example a cup, a mug, or suchlike.

The machine 200 can comprise a user interface 79 provided with a display device 80, for example a touchscreen, by means of which a user can select a certain beverage, set one or several characteristics thereof, or select other options or operating modes of the machine 200.

For example, the user interface 79 could be configured to generate a light signal or a warning message relating to the quantity of beans present in the hopper 11 weighed by the weighing means 70. For example, the control unit 75 can command the display of a signal on the user interface 79 when the weight detected by the weighing means 70 relating to the quantity of beans in the hopper 11 is lower than a certain predefined threshold value. Additionally, or alternatively, it is possible to supply a message to inform a user of the quantity of residual beans in the hopper 11, for example by indicating the number of beverages that it is be possible to deliver with such quantity of beans present.

The operation of the grinding apparatus 10, 110, 210 described heretofore, which correspond to the grinding method for preparing a dose of powder substance according to the invention, comprises the following steps.

A first step in which a quantity of beans is supplied inside the hopper/s 11, 111 such as to at least partly fill the container/s 14, 114.

A subsequent step in which a user supplies and/or selects a command for the preparation of a dose of powder substance, in the case of an autonomous apparatus 10, 110, 210, or for the preparation of a beverage, in the case of a machine 200.

In the latter case, the user can also set one or more characteristics of the machine 200, or can select other options or operating modes thereof. This step can be carried out, for example, using the display device 80. Please note that the quantity of beans required to prepare the beverage selected by the user can be stored in the storage unit 76, or it can possibly be modified by the user.

During this step, the weighing means 70 weigh, substantially continuously, the instantaneous value of the hopper 11, 111 and of its contents in order to measure the quantity of beans present in the hopper/s 11, 111 and send a corresponding signal to the control unit 75.

According to possible embodiments, this weighing can be carried out periodically, for example establishing a predetermined time interval, or also whenever a user gives and/or selects the command for the preparation of a dose of powder.

Advantageously, this allows the control unit 75 to calculate the number of beverages that it is possible to prepare and deliver with the quantity of beans present in the single, or in each, hopper 11, 111 and, for example, the user interface 79 can show the user a message relating to such number, or notify the user when the quantity of beans remaining is lower a predefined threshold level.

The method also comprises a subsequent step in which the feed means 29, 129 which form part of the dosing device 13, 113 are driven to selectively feed the beans toward the grinding device 12.

With reference to the embodiment shown in figs. from 2 to 6, the beans fall by gravity through the aperture 15 and thus fill the chamber 39 inside which the feed member 30 is disposed.

The feed member 30 is made to rotate selectively around the axis of rotation X, so that its blade 34 pushes the beans that are in the chamber 39 toward the exit aperture 17, the passage aperture 20 and then the inlet 49 of the collection chamber 50.

Instead, with reference to the embodiment shown in figs. 7 and 8, the beans fall by gravity through the aperture 15 and fill at least a first portion, toward the left in fig. 8, of the feed channel 57.

The auger 58 is activated and made to rotate around the longitudinal axis Y, so that it transports the beans in the longitudinal direction Y (horizontally to the right in fig. 8) toward the exit aperture 117 and consequently toward the inlet 49 of the collection chamber 50.

During this step, the grinding device 12 can be activated to progressively grind the beans which are fed into it. According to possible variants, the grinding device 12 can be activated once the required quantity of beans has been fed.

While the feed means 29, 129 are in operation, the weighing means 70 weigh the instantaneous value of the quantity of beans present in the hopper 11, 111, and send a signal to the control unit 75 which compares a resulting value, given by the difference between the weight of the beans calculated before the feed means 29, 129 are activated and such instantaneous value, with the preset value relating to the selected beverage.

When the instantaneous value measured corresponds to the preset value, the feed means 29, 129 of the dosing device 13, 113 are stopped by the control unit 75, the feed of the beans to the collection chamber 50 connected to the grinding device 12 is interrupted and the grinding device 12 is commanded in order to completely grind the beans present inside it and thus obtain the desired dose of powder.

The feed of the beans during this step could comprise a first initial sub-step in which the feed means 29, 129 are activated and made to rotate at a first speed, for example close to the maximum speed, or a predefined nominal speed, and a second sub-step in which the feed means 29, 129 are made to slow down and rotate with a second lower speed, so as to allow a more gradual and precise dosing of the beans to the grinding device 12.

For example, the passage from the first to the second rotation speed can be performed when the weighing means 70 detect that the weight of the beans fed to the grinding device 12, that is, released by the respective hopper 11, 111, has reached a certain reference value, for example corresponding to a percentage comprised between 70% and 90% of the total weight of the quantity required, preferably about 75-85%.

The method for preparing a dose of powder substance comprises a control step to verify whether there is a residual quantity of beans in the grinding device 12, or whether the entire quantity of beans fed has been completely ground, before switching off the grinding device 12.

According to some embodiments, the control unit 75 could detect the current intensity absorbed by the grinding device 12 and compare it with a predetermined, or expected, current value relating to the specific beverage and to the strength which are selected by the user, the current value being stored in the storage unit 76, for example. For example, this detection of the current intensity absorbed can be performed by one or more current sensors, not shown in the attached drawings.

Alternatively, or in addition, the control unit 75 could compare the difference in the speed of the rotation of the drive member 61 or of the grinders 22, for example detected by means of special sensors, not shown, with respect to the steady state normal operating values.

For example, the control unit 75 can detect the rotation speed of the grinders 22 or of the drive member 64, and compare it with a predetermined value, for example stored in the storage unit 76, or with a rotation speed detected in a previous instant.

In the case of an autonomous apparatus 10, 110, 210, the powder can be fed to a filter holder, or other container; while in the case of an automatic and/or manual type machine 200, it can be fed directly to the infusion unit 77.

The powder can be fed to the infusion unit 77, for example through a fall by gravity.

According to some embodiments, it can be provided that the control unit 75 verifies that the quantity of powder fed to the infusion unit 77 corresponds to the preset value relating to the beverage selected by the user before the powder is subjected to infusion and the beverage is delivered.

For example, this verification can provide to detect the volume of the quantity of coffee powder present in the infusion unit 77 after it has been subjected to compression, and compare it with an expected volume value for a certain dose of powder stored in the storage unit 76.

According to some embodiments, the method according to the invention can provide to compact the coffee powder fed to the infusion unit 77 with a defined pressure, measuring the height of the coffee mound obtained by means of detection sensors, not shown, and compare it with a pre-stored expected value in order to verify whether the quantity of coffee powder fed to the infusion unit 77 corresponds to the quantity required for the selected beverage.

If the quantity of coffee powder in the infusion unit 77 does not correspond to the quantity required, the control unit 75 can carry out a feedback adjustment in order to adjust the rotation of the drive means 29, 129 and the value of the reference weight to be considered for the preparation of a subsequent beverage.

According to possible variants, if the quantity of powder fed to the infusion unit 77 is lower than the predetermined one, the control unit 75 can send a command signal to once again activate the feed means 29, 129 and the grinding device 12, so as to obtain the required quantity of powder.

It is clear that modifications and/or additions of parts may be made to the grinding apparatus 10, 110, 210, to the machine 200 and to the methods for preparing a dose of powder substance and a beverage as described heretofore, without departing from the field and scope of the present invention, as defined by the claims.

It is also clear that, although the present invention has been described with reference to some specific examples, a person of skill in the art shall certainly be able to achieve many other equivalent forms of grinding apparatuses and methods, and machines and methods for preparing a beverage, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Grinding apparatus (10, 110, 210) equipped with at least one hopper (11, 111) removably connected to a support structure (18), a grinding device (12) and a dosing device (13, 113) configured to feed defined doses of beans, wherein said dosing device (13, 113) comprises feed means (29, 129) disposed inside said hopper (11, 111) and selectively drivable by means of drive means (26) to feed said beans toward an exit aperture (17, 117),
whereby said dosing device (13, 113) comprises weighing means (70) associated, during use, with said at least one hopper (11, 111) and configured to weigh said hopper (11, 111) and the beans present in said hopper (11, 111), and said grinding apparatus (10, 110, 210) comprises a control unit (75) connected to said weighing means (70) and configured to command the drive at least of said feed means (29, 129) and of said grinding device (12) as a function of the data detected by said weighing means (70),
**characterized in that** said weighing means (70) are connected to a fixed portion (18b) of said support structure (18) by means of mechanical support means (73), comprising at least one semi-rigid support element (72) or an elastic element (74) and are fixed to at least one mobile plate (18a) of said support structure (18), with which there is associated a housing compartment (40, 140) for said at least one hopper (11, 111), and between said housing compartment (40, 140) or said mobile plate (18a) and said fixed portion (18b), or between respective components integral therewith, there are provided end-of-travel members (41, 44) configured to reciprocally cooperate and limit a displacement of said compartment (40, 140) with respect to said fixed portion (18b), with the aim of limiting accidental overloads acting on said weighing means (70), further being **characterized in that** said drive means (26) are disposed outside said hopper (11, 111).

2. Grinding apparatus (10, 110, 210) as in claim 1, **characterized in that** said weighing means (70) comprise, or consist of, load cells (71) and/or dynamometers which at least partly support said at least one hopper (11, 111).

3. Grinding apparatus (10, 210) as in any claim hereinbefore, **characterized in that** said feed means (29) comprise a feed member (30) connected, during use, to said drive means (26), wherein said feed member (30) comprises a rotatable oblong body (30a) disposed in said hopper (11) and extending along a first axis of rotation (X), and a blade (34) that extends in a radial direction and is configured to selectively feed said beans toward said exit aperture (17).

4. Grinding apparatus (10, 210) as in claim 3, **characterized in that** said first axis of rotation (X) is inclined toward said exit aperture (17), with respect to a vertical axis, by an angle of inclination (α) comprised between 5° and 20° and said feed member (30) comprises a single blade (34).

5. Grinding apparatus (10, 210) as in claim 3 or 4, **characterized in that** said hopper (11) comprises a plate (35), having a bottom wall (37) provided with said exit aperture (17) in the proximity of a perimeter edge thereof, offset with respect to said first axis of rotation (X), and a substantially cylindrical lateral wall (38), distanced from said perimeter edge, which defines a chamber (39) inside which there is disposed, during use, said feed member (30).

6. Grinding apparatus (110) as in claim 1 or 2, **characterized in that** said feed means (129) comprise a feed channel (57), having a main development along a horizontal longitudinal axis (Y), inside which there is disposed an auger (58) able to be connected to said drive means (26), said auger (58) being disposed rotatable with respect to said longitudinal axis (Y), configured to receive said beans coming from an entry aperture (115) and to feed them through said exit aperture (117) toward said grinding device (12).

7. Grinding apparatus (10, 110, 210) as in any claim hereinbefore, **characterized in that** it comprises two or more hoppers (11, 11A, 11B, 111) removably connected to said support structure (18) and cooperating with said weighing means (70), wherein said two or more hoppers (11, 11A, 11B, 111) are connected, and feed beans, to the same grinding device (12).

8. Machine (200) for preparing coffee beverages, **characterized in that** it comprises a grinding apparatus (10, 110, 210) as in any claim from 1 to 7, at least partly housed in a compartment (202) of a support structure (201), an infusion unit (77) and at least one user interface (79) provided with at least one display device (80) by means of which a user can select a certain beverage, set one or more characteristics thereof, or select other options or operating modes.

9. Grinding method for preparing a dose of powder substance by means of a grinding apparatus (10, 110, 210) as in any claim 1 to 7 starting from a substance in the form of beans contained in at least one hopper (11, 111), able to:
- removably connect said at least one hopper (11, 111) to a support structure (18) and open an exit aperture (17, 117) for said beans;
- receive an indication concerning a desired value of a quantity of said beans to grind;
- weigh said at least one hopper (11, 111) and the beans present therein;
- drive feed means (29, 129) of a dosing device (13, 113) which are disposed inside said hopper (11, 111) by means of drive means (26) disposed outside said hopper (11, 111) to selectively feed said quantity of beans to grind through said exit aperture (17, 117) toward a grinding device (12);
- weigh, substantially continuously, an instantaneous value of said at least one hopper (11, 111) during the feed of said beans;
- compare said instantaneous value measured, intended as the difference between the weight measured during said feed and the weight measured before said feed, with said desired value and, if they coincide, stop said feed means (29, 129);
- command said grinding device (12) to completely grind said quantity of beans and obtain said dose of powder substance.

10. Grinding method as in claim 9, **characterized in that** it comprises a control step to verify whether there is a residual quantity of said beans in said grinding device (12) or whether all the quantity of said beans fed has been completely ground, before turning off said grinding device (12).

11. Grinding method as in claim 10, **characterized in that** said control step provides to detect at least one of either the current intensity absorbed by said grinding device (12) and/or the rotation speed of said grinding device (12) during the grinding step as above, and compare them with respective threshold values.

12. Grinding method as in any claim from 10 to 12, **characterized in that** it provides to initially drive said feed means (29, 129) to make them rotate at a first rotation speed and, when said instantaneous value measured corresponds to a reference value correlated to a percentage of said quantity of beans to grind, slow them down and make them rotate at a second rotation speed lower than said first rotation speed.

13. Grinding method as in any claim from 9 to 12, **characterized in that** it provides to send a signal to a user by means of a user interface (79), to signal when the quantity of said beans in said hopper (11, 111) is below a predefined threshold value, so as to facilitate the user in restoring the reserve of said beans.

14. Method for preparing a beverage by means of a machine (200) for preparing beverages according to claim 8, **characterized in that** it is able to:
- removably connect at least one hopper (11, 111) to a support structure (18) and open an exit aperture (17, 117) for said beans;
- receive a command for the preparation of a selected beverage in a machine (200) for preparing beverages, determining a quantity of beans necessary and sufficient to prepare said selected beverage;
- weigh a quantity of beans contained in said at least one hopper (11, 111) associated with said machine (200), and execute
- a step of preparing a dose of powder substance in which feed means (29, 129) of a dosing device (13, 113), which are disposed inside said hopper (11, 111), are driven by means of drive means (26) outside said hopper (11, 111) to selectively feed said quantity of beans toward a grinding device (12);
- a step, simultaneous with or subsequent to the previous one, in which said grinding device (12) is activated to completely grind said fed quantity of beans and obtain said powder substance;
- a step in which weighing means (70) weigh an instantaneous value of said hopper (11, 111) in order to measure said quantity of said beans fed into said grinding device (12) and send a signal relating to said instantaneous value to a control unit (75) which compares it with preset values, and when said instantaneous value measured corresponds to a desired value relating to said selected beverage, said control unit (75) stops said feed means (29, 129) and commands said grinding device (12) to completely grind said quantity of beans and obtain a powder to be fed to an infusion unit (77);
- a step in which said powder is subjected to infusion and said beverage is delivered.

15. Method for preparing a beverage as in claim 14, **characterized in that** it also comprises a control step in which said control unit (75) verifies that the quantity of said powder fed to said infusion unit (77) corresponds to said preset value, before subjecting it to infusion and delivering said beverage.

## Patentansprüche

1. Mahlapparat (10, 110, 210), der mit zumindest einem Trichter (11, 111), der mit einer Stützstruktur (18) abnehmbar verbunden ist, einer Mahlvorrichtung (12) und einer Dosiervorrichtung (13, 113), die dafür ausgelegt ist, festgelegte Dosen von Bohnen zuzuführen, versehen ist, worin die Dosiervorrichtung (13, 113) Zuführmittel (29, 129) umfasst, die innerhalb des Trichters (11, 111) angeordnet sind und die selektiv mittels Antriebsmittel (26) antreibbar sind, um die Bohnen zu einer Austrittsöffnung (17, 117) hin zuzuführen, wobei die Dosiervorrichtung (13, 113) Wiegemittel (70) umfasst, die, während der Benutzung, mit dem zumindest einen Trichter (11, 111) verbunden sind und dafür ausgelegt sind, den Trichter (11, 111) und die Bohnen, die im Trichter (11, 111) vorhanden sind, zu wiegen, und der Mahlapparat (10, 110, 210) eine Steuerungseinheit (75) umfasst, die mit den Wiegemitteln (70) verbunden ist und dafür ausgelegt ist, den Antrieb zumindest der Zuführmittel (29, 129) und der Mahlvorrichtung (12) in Abhängigkeit von den Daten zu steuern, die von den Wiegemitteln (70) erkannt wurden, **dadurch gekennzeichnet, dass** die Wiegemittel (70) mit einem festen Abschnitt (18b) der Stützstruktur (18) mittels mechanischer Stützmittel (73) verbunden sind, die zumindest ein halbsteifes Stützelement (72) oder ein elastisches Element (74) umfassen, und an zumindest einer beweglichen Platte (18a) der Stützstruktur (18) befestigt sind, mit der ein Aufnahmeraum (40, 140) für den zumindest einen Trichter (11, 111) verbunden ist, und zwischen dem Aufnahmeraum (40, 140) oder der beweglichen Platte (18a) und dem festen Abschnitt (18b), oder zwischen jeweiligen Komponenten, die damit einstückig sind, Endanschlagelemente (41, 44) vorgesehen sind, die dafür ausgelegt sind, wechselseitig zusammenzuwirken und eine Verschiebung des Raums (40, 140) im Hinblick auf den festen Abschnitt (18b) zu begrenzen, mit dem Zweck, unbeabsichtigte Überlasten, die auf die Wiegemittel (70) wirken, zu begrenzen, ferner **dadurch gekennzeichnet, dass** die Antriebsmittel (26) außerhalb des Trichters (11, 111) angeordnet sind.

2. Mahlapparat (10, 110, 210) nach Anspruch 1, **dadurch gekennzeichnet, dass** die Wiegemittel (70) Kraftmesszellen (71) und/oder Kraftmesser umfassen oder daraus bestehen, die zumindest teilweise den zumindest einen Trichter (11, 111) stützen.

3. Mahlapparat (10, 210) nach einem der vorhergehenden Ansprüche, **dadurch gekennzeichnet, dass** die Zuführmittel (29) ein Zuführelement (30) umfassen, das, während der Benutzung, mit den Antriebsmitteln (26) verbunden ist, worin das Zuführelement (30) einen drehbaren länglichen Körper (30a), der im Trichter (11) angeordnet ist und sich entlang einer ersten Drehachse (X) erstreckt, und ein Blatt (34), das sich in einer radialen Richtung erstreckt, und dafür ausgelegt ist, die Bohnen selektiv zur Austrittsöffnung hin (17) zuzuführen, umfasst.

4. Mahlapparat (10, 210) nach Anspruch 3, **dadurch gekennzeichnet, dass** die erste Drehachse (X) zur Austrittsöffnung (17) hin, im Hinblick auf eine vertikale Achse, um einen Neigungswinkel (*α*) zwischen 5° und 20° geneigt ist und das Zuführelement (30) ein einziges Blatt (34) umfasst.

5. Mahlapparat (10, 210) nach Anspruch 3 oder 4, **dadurch gekennzeichnet, dass** der Trichter (11) eine Platte (35), die eine Bodenwand (37), die mit der Austrittsöffnung (17) in der Nähe eines Umfangsrandes davon, versetzt im Hinblick auf die erste Drehachse (X), versehen ist, und eine im Wesentlichen zylindrische seitliche Wand (38), die vom Umfangsrand beabstandet ist, die eine Kammer (39) definiert, innerhalb welcher, während der Benutzung, das Zuführelement (30) angeordnet ist, umfasst.

6. Mahlapparat (110) nach Anspruch 1 oder 2, **dadurch gekennzeichnet, dass** die Zuführmittel (129) einen Zuführkanal (57) umfassen, der einen Hauptverlauf entlang einer horizontalen Längsachse (Y) hat, innerhalb dessen eine Schnecke (58) angeordnet ist, die mit den Zuführmitteln (26) verbunden werden kann, wobei die Schnecke (58) drehbar im Hinblick auf die Längsachse (Y) angeordnet ist, dafür ausgelegt ist, die Bohnen, die von einer Eintrittsöffnung (115) kommen, zu empfangen und sie durch die Austrittsöffnung (117) zur Mahlvorrichtung (12) hin zuzuführen .

7. Mahlapparat (10, 110, 210) nach einem der vorhergehenden Ansprüche, **dadurch gekennzeichnet, dass** er zwei oder mehrere Trichter (11, 11A, 11B, 111) umfasst, die mit der Stützstruktur (18) abnehmbar verbunden sind und mit den Wiegemitteln (70) zusammenwirken, worin die zwei oder die mehreren Trichter (11, 11A, 11B, 111) mit derselben Mahlvorrichtung (12) verbunden sind und dieser Bohnen zuführen.

8. Maschine (200) zur Zubereitung von Kaffeegetränken, **dadurch gekennzeichnet, dass** sie einen Mahlapparat (10, 110, 210) nach einem der Ansprüche 1 bis 7, der zumindest teilweise in einem Raum (202) einer Stützstruktur (201) untergebracht ist, eine Aufgusseinheit (77) und zumindest eine Benutzerschnittstelle (79) umfasst, die mit zumindest einer Anzeigevorrichtung (80) versehen ist, mittels welcher ein Benutzer ein gewisses Getränk auswählen, ein oder mehrere Merkmale davon festsetzen oder andere Optionen oder Betriebsmodi auswählen kann.

9. Mahlverfahren zur Zubereitung einer Dosis von pulvrigem Stoff mittels eines Mahlapparats (10, 110, 210) nach einem der Ansprüche 1 bis 7 ausgehend von einem Stoff in Form von Bohnen, die in zumindest einem Trichter (11, 111) enthalten sind, das Folgendes tun kann:
- den zumindest einen Trichter (11, 111) mit einer Stützstruktur (18) abnehmbar verbinden und eine Austrittsöffnung (17, 117) für die Bohnen öffnen;
- einen Hinweis über einen gewünschten Wert einer Menge der zu mahlenden Bohnen empfangen;
- den zumindest einen Trichter (11, 111) und die darin vorhandenen Bohnen wiegen;
- Zuführmittel (29, 129) einer Dosiervorrichtung (13, 113), die innerhalb des Trichters (11, 111) angeordnet sind, mittels Antriebsmittel (26) antreiben, die außerhalb des Trichters (11, 111) angeordnet sind, um die Menge der zu mahlenden Bohnen durch die Austrittsöffnung (17, 117) zu einer Mahlvorrichtung (12) hin selektiv zuzuführen;
- im Wesentlichen kontinuierlich einen Augenblickswert des zumindest einen Trichters (11, 111) während der Zuführung der Bohnen wiegen;
- den gemessenen Augenblickswert, der als Unterschied zwischen dem während der Zuführung gemessenen Gewicht und dem vor der Zuführung gemessenen Gewicht verstanden wird, mit dem gewünschten Wert vergleichen und, wenn sie übereinstimmen, die Zuführmittel (29, 129) stoppen;
- die Mahlvorrichtung (12) steuern, damit sie die Menge von Bohnen vollständig mahlt und die Dosis von pulverigem Stoff erhält.

10. Mahlverfahren nach Anspruch 9, **dadurch gekennzeichnet, dass** es einen Steuerungsschritt umfasst, um zu überprüfen, ob es eine Restmenge von Bohnen in der Mahlvorrichtung (12) gibt oder ob die ganze Menge der zugeführten Bohnen vollständig gemahlen worden ist, bevor die Mahlvorrichtung (12) ausgeschaltet wird.

11. Mahlverfahren nach Anspruch 10, **dadurch gekennzeichnet, dass** der Steuerungsschritt vorsieht, zumindest eine von entweder der Stromstärke, die von der Mahlvorrichtung (12) aufgenommen wird, und/oder der Rotationsgeschwindigkeit der Mahlvorrichtung (12) während des obigen Mahlschrittes zu erkennen, und sie mit jeweiligen Schwellenwerten vergleichen.

12. Mahlverfahren nach einem der Ansprüche 10 bis 12, **dadurch gekennzeichnet, dass** es vorsieht, die Zuführmittel (29, 129) anfänglich so anzutreiben, um sie bei einer ersten Rotationsgeschwindigkeit zu drehen und, wenn der gemessene Augenblickswert einem Referenzwert entspricht, der sich auf einen Prozentsatz der Menge von zu mahlenden Bohnen bezieht, sie zu verlangsamen und sie bei einer zweiten Rotationsgeschwindigkeit zu drehen, die geringer ist als die erste Rotationsgeschwindigkeit.

13. Mahlverfahren nach einem der Ansprüche 9 bis 12, **dadurch gekennzeichnet, dass** es vorsieht, ein Signal einem Benutzer mittels einer Benutzerschnittstelle (79) zu senden, um zu signalisieren, wenn die Menge von Bohnen in dem Trichter (11, 111) unter einem vorbestimmten Schwellenwert liegt, so dass der Benutzer beim Wiederherstellen der Reserve von Bohnen erleichtert wird.

14. Verfahren zur Zubereitung eines Getränkes mittels einer Maschine (200) zur Zubereitung von Getränken nach Anspruch 8, **dadurch gekennzeichnet, dass** es Folgendes tun kann:
- zumindest einen Trichter (11, 111) mit einer Stützstruktur (18) abnehmbar verbinden und eine Austrittsöffnung (17, 117) für die Bohnen öffnen;
- einen Befehl für die Zubereitung eines ausgewählten Getränkes in einer Maschine (200) zur Zubereitung von Getränken empfangen, eine Menge von Bohnen bestimmen, die für die Zubereitung des ausgewählten Getränkes erforderlich und ausreichend sind;
- eine Menge von Bohnen, die in dem zumindest einen Trichter (11, 111) enthalten sind, der mit der Maschine (200) verbunden ist, wiegen, und ausführen
- einen Schritt des Zubereitens einer Dosis von pulvrigem Stoff, in dem Zuführmittel (29, 129) einer Dosiervorrichtung (13, 113), die innerhalb des Trichters (11, 111) angeordnet sind, mittels Antriebsmittel (26) außerhalb des Trichters (11, 111) angetrieben werden, um die Menge von Bohnen zu einer Mahlvorrichtung (12) hin selektiv zuzuführen;
- einen Schritt, gleichzeitig mit dem vorhergehenden oder darauf nachfolgend, in dem die Mahlvorrichtung (12) betätigt wird, um die zugeführte Menge von Bohnen völlig zu mahlen und den pulvrigen Stoff zu erhalten;
- einen Schritt, in dem Wiegemittel (70) einen Augenblickswert des Trichters (11, 111) wiegen, um die Menge der Bohnen, die in die Mahlvorrichtung (12) zugeführt wurden, zu messen und ein Signal, das sich auf den Augenblickswert bezieht, einer Steuerungseinheit (75) zu senden, die es mit vorgegebenen Werten vergleicht, und wenn der gemessene Augenblickswert einem gewünschten Wert entspricht, der sich auf das ausgewählte Getränk bezieht, die Steuerungseinheit (75) die Zuführmittel (29, 129) stoppt und die Mahlvorrichtung (12) steuert, damit sie die Menge von Bohnen vollständig mahlt und ein Pulver erhält, das einer Aufgusseinheit (77) zugeführt werden soll;
- einen Schritt, in dem das Pulver einem Aufguss unterzogen wird und das Getränk geliefert wird.

15. Verfahren zur Zubereitung eines Getränkes nach Anspruch 14, **dadurch gekennzeichnet, dass** es auch einen Steuerungsschritt umfasst, in dem die Steuerungseinheit (75) überprüft, dass die Menge des Pulvers, das der Aufgusseinheit (77) zugeführt wurde, dem vorgegebenen Wert entspricht, bevor es einem Aufguss unterzogen wird und das Getränk geliefert wird.

## Revendications

1. Appareil de broyage (10, 110, 210) équipé d'au moins une trémie (11, 111) reliée de manière amovible à une structure de support (18), un dispositif de broyage (12) et un dispositif de dosage (13, 113) configuré pour acheminer des doses définies de grains, dans lequel ledit dispositif de dosage (13, 113) comprend des moyens d'acheminement (29, 129) disposés à l'intérieur de ladite trémie (11, 111) et pouvant être entraînés de manière sélective au moyen de moyens d'entraînement (26) pour acheminer lesdits grains vers une ouverture de sortie (17, 117), ledit dispositif de dosage (13, 113) comprenant des moyens de pesage (70) associés, pendant l'utilisation, à ladite au moins une trémie (11, 111) et configurés pour peser ladite trémie (11, 111) et les grains présents dans ladite trémie (11, 111), et ledit appareil de broyage (10, 110, 210) comprenant une unité de contrôle (75) reliée auxdits moyens de pesage (70) et configurée pour commander l'entraînement au moins desdits moyens d'acheminement (29, 129) et dudit dispositif de broyage (12) en fonction des données détectées par lesdits moyens de pesage (70), **caractérisé en ce que** lesdits moyens de pesage (70) sont reliés à une partie fixe (18b) de ladite structure de support (18) au moyen de moyens de support mécaniques (73), comprenant au moins un élément de support semi-rigide (72) ou un élément élastique (74) et sont fixés à au moins une plaque mobile (18a) de ladite structure de support (18), à laquelle est associé un compartiment (40, 140) de logement pour ladite au moins une trémie (11, 111), et entre ledit compartiment (40, 140) de logement ou ladite plaque mobile (18a) et ladite partie fixe (18b), ou entre des composants respectifs solidaires de celle-ci, sont prévus des organes de fin de course (41, 44) configurés pour coopérer réciproquement et limiter un déplacement dudit compartiment (40, 140) par rapport à ladite partie fixe (18b), dans le but de limiter les surcharges accidentelles agissant sur lesdits moyens de pesage (70), **caractérisé en outre en ce que** lesdits moyens d'entraînement (26) sont disposés à l'extérieur de ladite trémie (11, 111).

2. Appareil de broyage (10, 110, 210) selon la revendication 1, **caractérisé en ce que** lesdits moyens de pesage (70) comprennent, ou sont constitués de, des cellules de charge (71) et/ou des dynamomètres qui supportent au moins partiellement ladite au moins une trémie (11, 111).

3. Appareil de broyage (10, 210) selon une quelconque revendication précédente, **caractérisé en ce que** lesdits moyens d'acheminement (29) comprennent un organe d'acheminement (30) relié, pendant l'utilisation, auxdits moyens d'entraînement (26), dans lequel ledit organe d'acheminement (30) comprend un corps oblong rotatif (30a) disposé dans ladite trémie (11) et s'étendant le long d'un premier axe de rotation (X), et une lame (34) qui s'étend dans une direction radiale et est configurée pour acheminer de manière sélective lesdits grains vers ladite ouverture de sortie (17).

4. Appareil de broyage (10, 210) selon la revendication 3, **caractérisé en ce que** ledit premier axe de rotation (X) est incliné vers ladite ouverture de sortie (17), par rapport à un axe vertical, d'un angle d'inclinaison (α) compris entre 5° et 20° et ledit organe d'acheminement (30) comprend une seule lame (34).

5. Appareil de broyage (10, 210) selon la revendication 3 ou 4, **caractérisé en ce que** ladite trémie (11) comprend une plaque (35), présentant une paroi inférieure (37) munie de ladite ouverture de sortie (17) à proximité d'un bord périmétrique de celle-ci, décalée par rapport audit premier axe de rotation (X), et une paroi latérale sensiblement cylindrique (38), espacée dudit bord périmétrique, qui définit une chambre (39) à l'intérieur de laquelle est disposé, pendant l'utilisation, ledit organe d'acheminement (30).

6. Appareil de broyage (110) selon la revendication 1 ou 2, **caractérisé en ce que** lesdits moyens d'acheminement (129) comprennent un canal d'acheminement (57), présentant un développement principal le long d'un axe longitudinal horizontal (Y), à l'intérieur duquel est disposée une vis sans fin (58) apte à être reliée auxdits moyens d'entraînement (26), ladite vis sans fin (58) étant disposée de manière rotative par rapport audit axe longitudinal (Y), configurée pour recevoir lesdits grains provenant d'une ouverture d'entrée (115) et pour les acheminer à travers ladite ouverture de sortie (117) vers ledit dispositif de broyage (12).

7. Appareil de broyage (10, 110, 210) selon l'une quelconque des revendications précédentes, **caractérisé en ce qu'**il comprend deux trémies (11, 11A, 11B, 111) ou plus reliées de manière amovible à ladite structure de support (18) et coopérant avec lesdits moyens de pesage (70), dans lequel lesdites deux trémies (11, 11A, 11B, 111) ou plus sont reliées, et acheminent les grains, jusqu'au même dispositif de broyage (12).

8. Machine (200) de préparation de boissons au café, **caractérisée en ce qu'**elle comprend un appareil de broyage (10, 110, 210) selon l'une quelconque des revendications 1 à 7, au moins en partie logé dans un compartiment (202) d'une structure de support (201), une unité d'infusion (77) et au moins une interface utilisateur (79) munie d'au moins un dispositif d'affichage (80) au moyen duquel un utilisateur peut sélectionner une certaine boisson, définir une ou plusieurs caractéristiques de celle-ci, ou sélectionner d'autres options ou modes de fonctionnement.

9. Procédé de broyage pour préparer une dose de substance pulvérulente au moyen d'un appareil de broyage (10, 110, 210) selon l'une quelconque des revendications 1 à 7 à partir d'une substance sous forme de grains contenus dans au moins une trémie (11, 111), capable de :
- relier de manière amovible ladite au moins une trémie (11, 111) à une structure de support (18) et ouvrir une ouverture de sortie (17, 117) pour lesdits grains ;
- recevoir une indication concernant une valeur souhaitée d'une quantité desdits grains à broyer ;
- peser ladite au moins une trémie (11, 111) et les grains qui y sont présents ;
- entraîner des moyens d'acheminement (29, 129) d'un dispositif de dosage (13, 113) qui sont disposés à l'intérieur de ladite trémie (11, 111) au moyen de moyens d'entraînement (26) disposés à l'extérieur de ladite trémie (11, 111) pour acheminer de manière sélective ladite quantité de grains à broyer à travers ladite ouverture de sortie (17, 117) vers un dispositif de broyage (12) ;
- peser, de manière sensiblement continue, une valeur instantanée de ladite au moins une trémie (11, 111) pendant l'acheminement desdits grains ;
- comparer ladite valeur instantanée mesurée, destinée à représenter la différence entre le poids mesuré pendant ledit acheminement et le poids mesuré avant ledit acheminement, avec ladite valeur souhaitée et, si elles coïncident, arrêter lesdits moyens d'acheminement (29, 129) ;
- commander ledit dispositif de broyage (12) pour broyer complètement ladite quantité de grains et obtenir ladite dose de substance pulvérulente.

10. Procédé de broyage selon la revendication 9, **caractérisé en ce qu'**il comprend une étape de contrôle pour vérifier s'il reste une quantité résiduelle desdits grains dans ledit dispositif de broyage (12) ou si toute la quantité desdits grains acheminés a été complètement broyée, avant d'éteindre ledit dispositif de broyage (12).

11. Procédé de broyage selon la revendication 10, **caractérisé en ce que** ladite étape de contrôle prévoit de détecter au moins l'une parmi l'intensité de courant absorbée par ledit dispositif de broyage (12) et/ou de la vitesse de rotation dudit dispositif de broyage (12) pendant l'étape de broyage comme ci-dessus, et de les comparer avec des valeurs de seuil respectives.

12. Procédé de broyage selon l'une quelconque des revendications 10 à 12, **caractérisé en ce qu'**il prévoit d'entraîner initialement lesdits moyens d'acheminement (29, 129) pour les faire tourner à une première vitesse de rotation et, lorsque ladite valeur instantanée mesurée correspond à une valeur de référence corrélée à un pourcentage de ladite quantité de grains à broyer, de les ralentir et de les faire tourner à une seconde vitesse de rotation inférieure à ladite première vitesse de rotation.

13. Procédé de broyage selon l'une quelconque des revendications 9 à 12, **caractérisé en ce qu'**il prévoit d'envoyer un signal à un utilisateur au moyen d'une interface utilisateur (79), pour signaler lorsque la quantité desdits grains dans ladite trémie (11, 111) est inférieure à une valeur de seuil prédéfinie, afin de faciliter la restauration de la réserve desdits grains pour l'utilisateur.

14. Procédé de préparation d'une boisson au moyen d'une machine (200) de préparation de boissons selon la revendication 8, **caractérisé en ce qu'**il est capable de :
- relier de manière amovible au moins une trémie (11, 111) à une structure de support (18) et ouvrir une ouverture de sortie (17, 117) pour lesdits grains ;
- recevoir une commande pour la préparation d'une boisson sélectionnée dans une machine (200) de préparation de boissons, déterminant une quantité de grains nécessaire et suffisante pour préparer ladite boisson sélectionnée ;
- peser une quantité de grains contenue dans ladite au moins une trémie (11, 111) associée à ladite machine (200), et exécuter
- une étape de préparation d'une dose de substance pulvérulente dans laquelle des moyens d'acheminement (29, 129) d'un dispositif de dosage (13, 113), qui sont disposés à l'intérieur de ladite trémie (11, 111), sont entraînés au moyen de moyens d'entraînement (26) à l'extérieur de ladite trémie (11, 111) pour acheminer de manière sélective ladite quantité de grains vers un dispositif de broyage (12) ;
- une étape, simultanée avec la précédente ou postérieure à celle-ci, dans laquelle ledit dispositif de broyage (12) est activé pour broyer complètement ladite quantité de grains acheminée et obtenir ladite substance pulvérulente ;
- une étape dans laquelle des moyens de pesage (70) pèsent une valeur instantanée de ladite trémie (11, 111) afin de mesurer ladite quantité desdits grains acheminés dans ledit dispositif de broyage (12) et d'envoyer un signal relatif à ladite valeur instantanée à une unité de contrôle (75) qui la compare à des valeurs prédéfinies, et lorsque ladite valeur instantanée mesurée correspond à une valeur souhaitée relative à ladite boisson sélectionnée, ladite unité de contrôle (75) arrête lesdits moyens d'acheminement (29, 129) et commande ledit dispositif de broyage (12) pour broyer complètement ladite quantité de grains et obtenir une poudre à acheminer vers une unité d'infusion (77) ;
- une étape dans laquelle ladite poudre est soumise à une infusion et ladite boisson est distribuée.

15. Procédé de préparation d'une boisson selon la revendication 14, **caractérisé en ce qu'**il comprend également une étape de contrôle dans laquelle ladite unité de contrôle (75) vérifie que la quantité de ladite poudre acheminée dans ladite unité d'infusion (77) correspond à ladite valeur prédéfinie, avant de la soumettre à l'infusion et de distribuer ladite boisson.
